# EUROPÄISCHE PATENTANMELDUNG

(11) **EP 0 786 373 A2**
(43) Veröffentlichungstag der Anmeldung: **30.07.1997**
(21) Anmeldenummer: 97100805.7
(22) Anmeldetag: 20.01.1997
(51) Int. Cl.: B60N 2/48

(54) **Fahrzeugsitz**

(30) Priorität: 29.01.1996 DE 29601479 U
(71) Anmelder: TRW Occupant Restraint Systems GmbH, 73551 Alfdorf (DE)
(72) Erfinder: Föhl, Artur, 73614 Schorndorf (DE)
(74) Vertreter: Degwert, Hartmut, Dipl.-Phys.

(57) **Zusammenfassung**

Ein Fahrzeugsitz mit einer in der Rückenlehne (3) integrierten Kopfstütze (5) ist dadurch gekennzeichnet, daß die Rückenlehne (3) mit einer Kraftaufnahmeeinrichtung, einer Kraftübertragungseinrichtung und einer Kopfstützenverstelleinrichtung versehen ist. Diese Einrichtungen sind so ausgebildet, daß die durch die träge Masse eines Fahrzeuginsassen (1) bei einem Heckaufprall erzeugte Kraft teilweise durch die Kraftaufnahmeeinrichtung aufgenommen und über die Kraftübertragungseinrichtung zur Verstelleinrichtung geleitet wird, um die Kopfstütze (5) zum Kopf des Fahrzeuginsassen (1) hin zu verstellen. Die Kopfstütze (5) kann mit einem separaten, als Kraftaufnahmeeinrichtung wirkenden Rückenlehnenteil (7) einen zweiarmigen Hebel (9) bilden, der um eine horizontale, in der Rückenlehne (3) angeordnete Schwenkachse (11) schwenkbar gelagert ist.

## Beschreibung

Die Erfindung betrifft einen Fahrzeugsitz mit einer in der Rückenlehne integrierten Kopfstütze.

Eine Kopfstütze verhindert unter anderem im Falle eines Heckaufpralls, daß der Kopf eines Fahrzeuginsassen relativ zum Fahrzeug nach hinten geschleudert wird. Üblicherweise sind Kopfstützen in die Rückenlehne einsteckbar und höhenverstellbar. Darüber hinaus gibt es auch Kopfstützen, die als verlängerter, fester Teil der Rückenlehne des Fahrzeugsitzes ausgebildet sind. Bei den zur Zeit in Fahrzeugen vorhandenen Kopfstützen sind, unabhängig, ob es sich um verstellbare oder nicht verstellbare Kopfstützen handelt, bei einem Heckaufprall die Halswirbel des Fahrzeuginsassen hohen Belastungen ausgesetzt, weil der Abstand des Kopfes zu Kopfstütze trotz Anlage des Rückens an der Rückenlehne verhältnismäßig groß sein kann (bis zu 150 mm).

Um diese Belastungen zu vermindern, wurde bereits vorgeschlagen, in der Kopfstütze einen Meinen Gassack unterzubringen. Im Kollisionsfall wird, gesteuert über einen Sensor, ein Gasgenerator aktiviert, der den Gassack innerhalb weniger Millisekunden füllt. Da jedoch der Abstand des Kopfes zum Gassack sehr stark differieren kann, würde beispielsweise bei einem sehr kurzen Abstand Kopf-Kopfstütze der Kopf vom Gassack sogar abgestoßen werden, was eine unerwünschte Belastung darstellt.

Es wurden auch Einrichtungen vorgeschlagen, welche im Kollisionsfall über Feder-Speicherenergie oder mittels Pyrotechnik über eine entsprechende Auslöseeinrichtung eine Abstützung für den Kopf derart nachführen, daß sie bei Kopfkontakt sofort in der jeweiligen Stellung verharrt. Für die Steuerung sind an der Oberfläche der Kopfabstützung entsprechende Sensoren angeordnet. Obwohl die so geschaffene Einrichtung im Versuch sehr positive Ergebnisse erzielt hat, wird sie aufgrund des mit ihr verbundenen hohen technischen Aufwandes nicht in Serie produziert.

Aufgabe der Erfindung ist es, einen kostengünstig herstellbaren Fahrzeugsitz mit einer Kopfstütze zu schaffen, der die bei einem Heckaufprall auf den Kopf und den Nackenbereich einwirkenden Kräfte reduziert.

Die Aufgabe wird bei einem gattungsgemäßen Fahrzeugsitz dadurch gelöst, daß die Rückenlehne mit einer Kraftaufnahmeeinrichtung, einer Kraftübenragungseinrichtung und einer Kopfstützverstelleinrichtung versehen ist, wobei die Einrichtungen so ausgebildet sind, daß die durch die träge Masse eines Fahrzeuginsassen bei einem Heckaufprall erzeugte Kraft teilweise durch die Kraftaufnahmeeinrichtung aufgenommen und über die Kraftübertragungseinrichtung zur Verstelleinrichtung geleitet wird, um die Kopfstütze zum Kopf des Fahrzeuginsassen hin zu verstellen. Erfindungsgemäß wird die träge Masse des Fahrzeuginsassen genutzt, um eine Verstellung der Kopfstütze zu verursachen, so daß kein separater Gassack oder aufwendige Sensoren notwendig sind. Die Kraftaufnahmeeinrichtung kann beispielsweise ein verschiebbar in der Rückenlehne integrierter Teil der Rückenlehne selbst sein, z.B. ein Polster, welches beim Heckaufprall durch die träge Masse in Richtung Fahrzeugheck geschoben wird. Die dadurch erzeugte Kraft kann über ein Gestänge oder ein Hebelwerk zur Kopfstütze geleitet werden. Dort ist eine Kopfstützenverstelleinrichtung vorgesehen, z.B. ein Gestänge oder ein Hebelwerk das die Kopfstütze verstellt.

Gemäß der bevorzugten Ausführungsform bildet die Kopfstütze mit einem separaten, als Kraftaufnahmeeinrichtung wirkenden Rückenlehnenteil einen zweiarmigen Hebel, der um eine horizontale, in der Rückenlehne angeordnete Schwenkachse schwenkbar gelagert ist. Diese Ausführungsform zeichnet sich durch einen besonders einfachen, kostengünstig herstellbaren Aufbau aus. Ein Teil der Rückenlehne wird dabei separat zum übrigen Rückenlehnenteil um eine Schwenkachse schwenkbar angeordnet, wobei der schwenkbare Rückenlehnenteil von außen selbstverständlich nicht als separates Teil erkennbar sein muß, sondern vorzugsweise unter einem Sitzbezug verborgen bleibt.

Der schwenkbare Rückenlehnenteil kann beispielsweise im Bereich des Körperschwerpunkts als Lendenwirbelpolster ausgebildet sein oder, gemäß einer bevorzugten Ausführungsform, eine im oberen Rückenlehnenbereich gebildete Schulterabstützung sein, wobei dann die Schwenkachse zwischen Kopfstütze und Schulterabstützung angeordnet ist. Bei dieser Ausführungsform liegt in der üblichen Gebrauchsstellung, also im normalen Fahrzeugbetrieb, weder der Schulterbereich an der Schulterabstützung, noch der Kopf an der Kopfstütze an. Im Falle eines Heckaufpralls stößt der Oberkörper des Fahrzeuginsassen relativ zum Fahrzeug nach hinten, und der Schulterbereich prallt gegen die nur geringfügig von ihm entfernte Schulterabstützung. Dies führt zu einer Verschwenkbewegung der durch die Kopfstütze und das Rückenlehnenteil gebildeten Einheit, so daß die Kopfstütze in Richtung Kopf des Fahrzeuginsassen geschwenkt wird. Der Abstand des Kopfes zur Kopfstütze wird dadurch wesentlich verringert oder gar vollständig beseitigt, wodurch auch die Beschleunigungswerte im Kopf- und Nackenbereich verringert werden.

Weil der Abstand Kopf-Kopfstütze relativ groß im Vergleich zum Abstand des Rückenlehnenteils vom entsprechenden Körperbereich ist, ist es vorteilhaft, wenn der durch den Kraftangriff eines Fahrzeuginsassen mittlerer Körperstatur gebildete Hebelarm an der Kopfstütze wesentlich länger als der durch den Kraftangriff am Rückenlehnenteil gebildete Hebelarm ist. Die Hebelarme beziehen sich dabei auf die jeweiligen Kraftangriffsmittelpunkte der auf die Kopfstütze und das Rückenlehnenteil einwirkenden Kräfte. So ergibt sich eine Übersetzung der Bewegung des Rückenlehnenteils zur Bewegung der Kopfstütze ins Schnelle.

Das Verhältnis der Hebelarme, die durch den Kraftangriff an der Kopfstütze und durch den Kraftangriff am Rückenlehnenteil gebildet werden, ist vorzugsweise reziprok zum Verhältnis der Körpermassen eines Fahrzeuginsassen mittlerer Körperstatur, die auf die Kopfstütze und das Rückenlehnenteil einwirken. Das Verhältnis der Hebelarme, die durch den Kraftangriff an der Kopfstütze und durch den Kraftangriff am Rückenlehnenteil gebildet werden, sollte im Bereich zwischen 2,5:1 bis 6:1, bevorzugt im Bereich zwischen 4:1 und 6:1, liegen.

Liegt das Hebelarmverhältnis in den angegebenen Bereichen, ergibt sich annähernd ein Kräftegleichgewicht am zweiarmigen Hebel, wenn der Kopf an der Kopfstütze und der Rücken des Fahrzeuginsassen am Rückenlehnenteil im Kollisionsfall anschlägt. Dies ist wichtig, damit der zweiarmige Hebel eine stabile Abstützung bildet. Der Gleichgewichtszustand am zweiarmigen Hebel hängt von den auf ihn einwirkenden Massen an beiden Hebelarmen ab. Bildet z.B. die Schulterabstützung das Rückenlehnenteil, das schwenkbar gelagert ist, so ist ein Gleichgewichtszustand dann erreichbar, wenn sich das Verhältnis der Hebelarme umgekehrt zu der Kopfmasse und der anteiligen Schultermasse verhält. Üblicherweise ist dieses Verhältnis 1:4 bis 1:6, so daß die Hebelarme das oben angegebene umgekehrte Verhältnis aufweisen. Ist die Kopfstütze nach vorne geschwenkt und berührt der Kopf die Kopfstütze, sollen möglichst keine nennenswerten Relativbewegungen zwischen Kopf und Schulter oder Kopf und Rückenteil mehr auftreten.

Das Verhältnis der Länge der Kopfstütze zur Länge des Rückenlehnenteils sollte im Bereich zwischen 2,5:1 bis 6:1 liegen, d.h. im Bereich des Verhältnisses der Hebelarme zueinander, so daß es nicht vorkommen kann, daß bei außergewöhnlich großen oder kleinen Fahrzeuginsassen überproportionale Hebelverhältnisse entstehen können.

Um auch die trägen Massen des zweiarmigen Hebels auszugleichen, verläuft vorzugsweise die Schwenkachse durch den Schwerpunkt des durch die Kopfstütze und den Rückenlehnenteil gebildeten zweiarmigen Hebels, so daß die gebildete Einheit in horizontaler Richtung und damit auch bei einem Heckaufprall kräfteneutral ist.

Gemäß einer weiteren Ausführungsform ist die Lagerung für die Schwenkachse so ausgebildet, daß bei radialer Beanspruchung die Verschwenkung der Kopfstütze und des Rückenlehnenteils zumindest gehemmt wird. Dadurch wird vermieden, daß beim Auftreffen des Kopfes auf die Kopfstütze der hierdurch erzeugte Impuls ein ungehindertes Rückschlagen des Rückenlehnenteils hervorruft. Bereits ein Hemmen der möglichen Verschwenkbewegung reduziert das Rückschlagen. Optimal ist jedoch eine Blockierung der Kopfstütze mit dem Rückenlehnenteil, nachdem letzteres die Kopfstütze näher zum Kopf geführt hat. Um den Rückschlag durch den auftreffenden Kopf zu verringern, weist die Lagerung Mittel zur Erzeugung einer Reibkraft und/oder Mittel zur Erzeugung eines Formschlusses auf, die die Verschwenkung hemmen oder verhindern. Hierzu kann die Lagerung so ausgebildet sein, daß bei einer bestimmten radialen Beanspruchung die Mittel zur Erzeugung der Reibkraft und/oder die Mittel zur Erzeugung eines Formschlusses durch eine durch die träge Masse des Fahrzeuginsassen hervorgerufene Relativbewegung zur Schwenkachse aus einer unbetätigten in eine betätigte Stellung verschiebbar sind. Damit wird die Hemmung oder Blockierung selbsttätig aktiviert.

Damit ausgeschlossen ist, daß eine Hemmung oder Blockierung im normalen Fahrbetrieb durch eine radiale Beanspruchung, z.B. beim Einstieg oder bei einem Beschleunigungsvorgang eintritt, ist eine Vorspanneinrichtung vorgesehen, die die unbetätigte Stellung festlegt, so daß erst eine bestimmte radiale Belastung aufgebracht werden muß, um die Mittel in die betätigte Stellung zu verschieben.

Die Mittel zur Erzeugung einer Reibkraft weisen vorzugsweise eine keilförmig zulaufende Aufnahmeöffnung auf, in die die Schwenkachse in betätigter Stellung in Anlage an die Außenwandung der Aufnahmeöffnung gedrückt wird. Dadurch ergibt sich eine Keilwirkung, so daß einem Verschwenken eine erhöhte Reibkraft entgegensteht, die sogar so hoch sein kann, daß eine Selbsthemmung eintritt, bei der kein Verschwenken mehr möglich ist.

Vorzugsweise hat die Lagerung der Schwenkachse eine Lageröffnung mit einem zylindrischen Abschnitt und einem nichtzylindrischen Abschnitt, wobei die Schwenkachse nur bei radialer Beanspruchung mit dem nichtzylindrischen Abschnitt in Kontakt gelangt und der nichtzylindrische Abschnitt zumindest teilweise die Mittel zur Erzeugung der Reibkraft und/oder zur Erzeugung des Formschlusses aufweist.

Die Mittel zur Erzeugung einer Reibkraft können außerhalb der Lagerung oder, gemäß der vorgenannten bevorzugten Ausführungsform, in der Lagerung selbst vorgesehen sein. Hierbei weist die Lageröffnung eine Ausbuchtung mit einem sich stetig verengenden Querschnitt auf, in den die Schwenkachse in der betätigten Stellung eindringt. Das bedeutet, die Lageröffnung hat einen Abschnitt, der eine Schwenkbewegung zuläßt, und einen sich daran anschließenden Abschnitt in Form einer Ausbuchtung, in den die Schwenkachse einrückbar und dort klemmbar ist.

Gemäß einer einfach realisierbaren Ausführungsform weist die Lageröffnung einen zylindrischen Abschnitt und einen nichtzylindrischen, gezahnten Abschnitt in einer Ausbuchtung auf, und die Schwenkachse hat einen Abschnitt mit einem zum gezahnten Abschnitt entsprechenden Gegenprofil sowie ebenfalls einen zylindrischen Abschnitt. Die entsprechenden Abschnitte gelangen bei einem Heckaufprall miteinander in Eingriff und verhindern ein Schwenken der Kopfstütze. Damit die Kopfstütze auch in einer normalen Gebrauchsstellung stabil gehalten wird, sind Haltemittel vorgesehen, die bei einem Heckaufprall durch Druck auf den Rückenlehnenteil aufgrund von Trägheitskräften überwunden werden müssen. Diese Haltemittel können z.B. wenistens einen Scherstift oder eine in Schwenkrichtung drehbare und in Gegenrichtung sperrbare ratschenartige Verbindung umfassen, wobei im letzteren Fall die ratschenartige Verbindung vorzugsweise einen sägezahnartigen, lagerseitigen Vorsprung umfaßt, der in der Gebrauchsstellung in eine komplementäre Ausnehmung in der Schwenkachse eingreift.

Auch können die Haltemittel eine Rückstellfeder umfassen, die die Kopfstütze in die Gebrauchsstellung und gegen einen Anschlag drückt.

Weiter kann ein Dämpfer vorgesehen sein, der die Schwenkbewegung der Kopfstütze bedämpft. Dies ist insbesondere dann vorteilhaft, wenn ein gewisser Abstand des Fahrzeuginsassen zur Schulterabstützung vorhanden ist, so daß sich ein entsprechender Stoß beim Auftreffen des Schulterbereichs auf die Schulterabstützung ergibt, der durch den Dämpfer ebenfalls abgemildert wird.

Die Erfindung wird nachfolgend unter Bezugnahme auf bevorzugte Ausführungsformen erläutert, die in den beigefügten Zeichnungen dargestellt sind. In diesen zeigen:
Figur 1 eine vereinfachte Prinzipzeichnung des erfindungsgemäßen Fahrzeugsitzes in teilweise aufgeschnittenem Zustand in Gebrauchsstellung,
Figur 2 den Fahrzeugsitz nach Figur 1 bei einem Heckaufprall,
Figur 3 den Fahrzeugsitz nach Figur 1 in perspektivischer Ansicht von schräg hinten,
Figur 4 den Fahrzeugsitz nach Figur 1 in perspektivischer Ansicht von schräg vorne,
Figur 5 einen Längsschnitt durch den oberen Teil des Fahrzeugsitzes samt Kopfstütze,
Figur 6 eine Schnittansicht nach der Linie X-X in Figur 5,
Figur 7 eine Seitenansicht einer Lagerung der Kopfstütze gemäß einer ersten Ausführungsform,
Figur 8 eine Seitenansicht der Lagerung der Kopfstütze gemäß einer zweiten Ausführungsform,
Figur 9 eine Seitenansicht der Lagerung der Kopfstütze gemäß einer dritten Ausführungsform,
Figur 10 eine Explosionsdarstellung der Kopfstütze samt Rückenlehnenteil der Lagerung nach Figur 9, und
Figur 11 eine an einem bügelförmigen, höhenverstellbaren Träger gelagerte Kopfstütze samt Rückenlehnenteil.

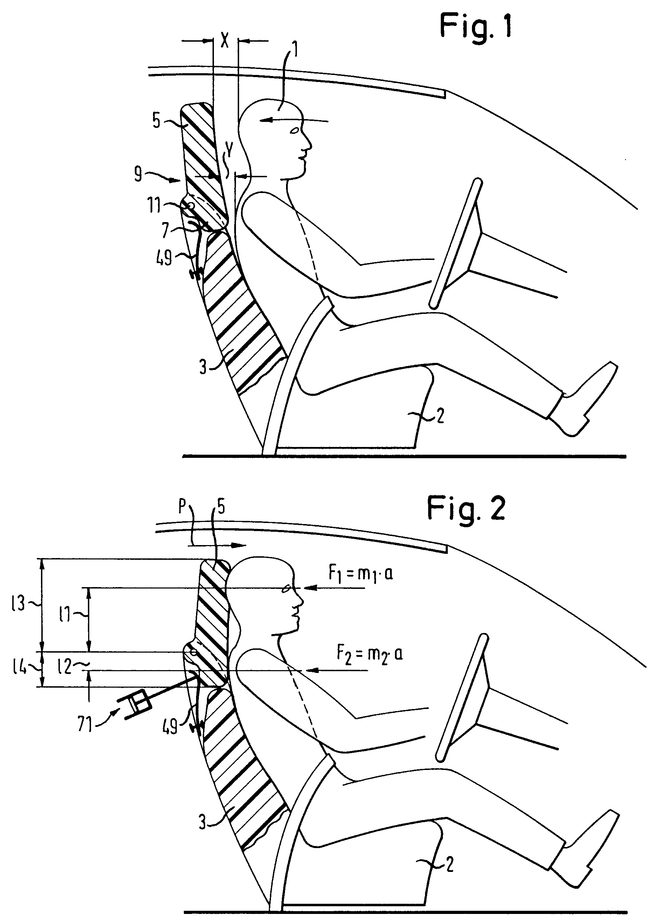

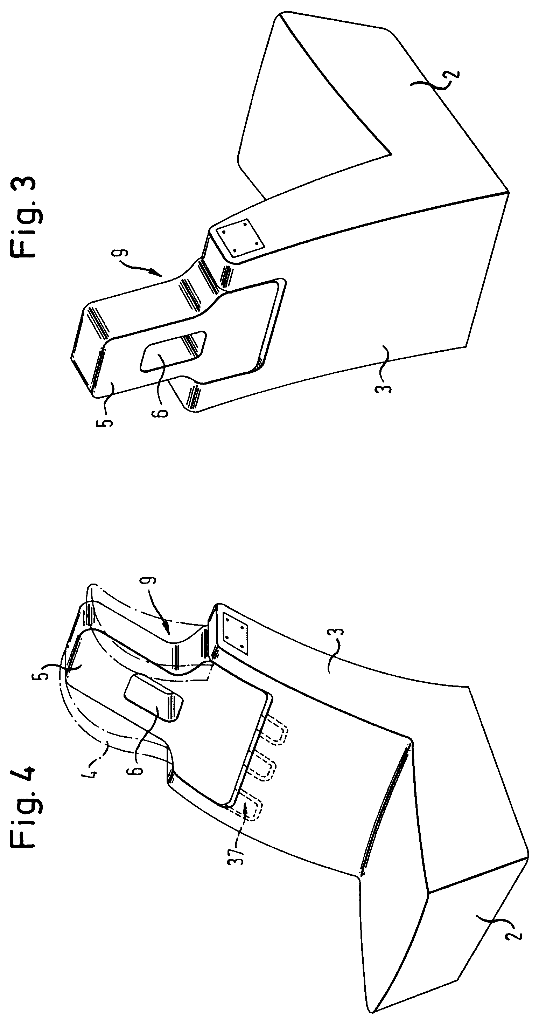

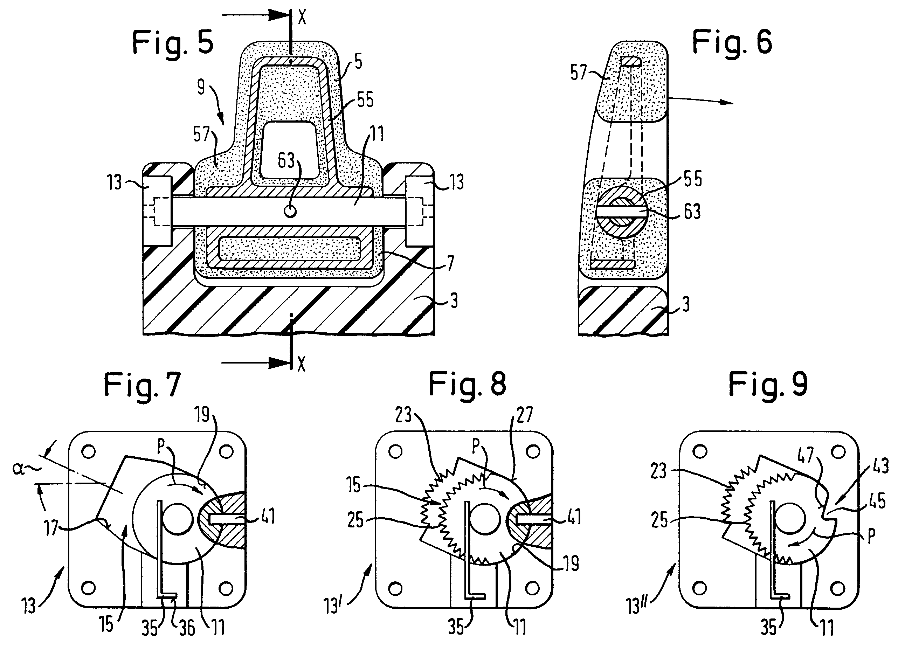

In Figur 1 ist ein Fahrzeugsitz 2 für einen Fahrzeuginsassen 1 in normaler Gebrauchsstellung, d.h. Fahrstellung gezeigt. Der Fahrzeugsitz 2 umfaßt eine Rückenlehne 3 mit einer Kopfstütze 5, die mit einer Schwerkachse 11 verbunden ist, die, wie Figur 5 eindeutiger zu entnehmen ist, in einem oberen Endbereich der Rückenlehne mittels zweier Lager 13 schwenkbar gelagert ist. Ein zur übrigen Rückenlehne 3 separater Teil, im folgenden Rückenlehnenteil 7 genannt, bildet im oberen Rückenlehnenbereich eine Schulterabstützung. Die Kopfstütze 5 und der Rückenlehnenteil 7 sind härter gepolstert als die übrige Rückenlehne 3, damit sich eine unmittelbare Kraftübertragung und schnelle Verstellung der Kopfstütze, wie später noch erläutert wird, ergibt. Der Rückenlehnenteil 7 ist einstückig mit der Kopfstütze 5 ausgebildet, und die Schwenkachse 11 ist zwischen Kopfstütze 5 und Schulterabstützung angeordnet, so daß sich durch die Kopfstütze 5 und das Rückenlehnenteil 7 ein zweiarmiger Hebel 9 ergibt. Der zweiarmige Hebel 9 ist um die Schwenkachse 11 schwenkbar. In der normalen Gebrauchsstellung gemäß Figur 1 hat die Kopfstütze zum Kopf des Fahrzeuginsassen 1 einen Abstand X, der etwa dem bei bislang üblichen Fahrzeugsitzen auftretenden Abstand entspricht. Die Schulter des Fahrzeuginsassen 1 weist einen geringeren Abstand Y zum Rückenlehnenteil 7 auf. Die Massen des zweiarmigen Hebels 9 und die Lage der Schwenkachse 11 sind so aufeinander abgestimmt, daß die Schwenkachse 11 durch den Schwerpunkt des Hebels 9 verläuft. Um einen Übergangsbereich 37 zwischen dem Rückenlehnenteil 7 und der übrigen Rückenlehne 3 nicht als Hohlraum auszubilden, greifen die Polsterteile in diesem Bereich verzahnungsartig ineinander, wie in Figur 4 mit unterbrochenen Linien angedeutet ist, wodurch eine Beeinträchtigung des Sitzkomforts vermieden wird. Weiter kann die Kopfstütze 5, wie in Figur 4 ebenfalls mit unterbrochenen Linien gezeigt ist, seitlich vorstehende Wülste 4 aufweisen und mit einer Fensterung 6 ausgebildet sein, wie auch Figur 4 zu entnehmen ist.

Damit der schwenkbare Hebel 9 stabil in der normalen Gebrauchsstellung verbleibt, ist gemäß Figur 1 eine Rückstellfeder 49 in Form einer auf die Rückseite des Rückenlehnenteils 7 drückenden Blattfeder vorgesehen, die das Rückenlehnenteil 7 gegen einen seitlichen, nicht gezeigten Anschlag drückt. Weiter ist gemäß Figur 2 ein Dämpfer 71 an der Rückseite des Rückenlehnenteils 7 angebracht, der bei Verschwenkung des Hebels 9 wirkt.

Der zweiarmige Hebel 9 ist gemäß Figur 5 mehrschichtig aufgebaut und umfaßt ein stabiles Skelett 55 mit einer Querbohrung, durch die sich die Schwenkachse 11 hindurch erstreckt. Ein Stift 63 verbindet das Skelett 55 drehfest mit der Schwenkachse 11. Das Skelett 55 ist mit einem Polster 57 umgeben, vorzugsweise indem es umschäumt ist. Wie Figur 6 zu entnehmen ist, ist das Skelett 55 teilweise mit Versteifungsrippen versehen, um Gewicht zu sparen.

Die Figuren 7 bis 9 zeigen verschiedene Lagerungsmöglichkeiten der Schwenkachse 11. Prinzipiell kann beispielsweise eine Seite der Rückenlehne 3 ein Drehlager haben und die andere Seite entsprechend mit einer in den Figuren 7 bis 9 gezeigten Lagerung 13, 13', 13'' ausgebildet sein, wobei jedoch vorteilhafterweise beide Seiten eine gleiche Lagerung aufweisen. In den Figuren 7 bis 9 ist die Lage der Schwenkachse 11 in der Lagerung 13, 13', 13'' in der normalen Gebrauchsstellung dargestellt. Die Lagerung 13 nach Figur 7 hat eine Lageröffnung 15 mit einem vorderen zylindrischen Abschnitt 19 und einer sich daran anschließenden Ausbuchtung 17, welche sich mit einem geringen Keilwinkel so verengt, daß die Schwenkachse 11 in der Ausbuchtung 17 verklemmt werden kann. Die Mittellinie der Ausbuchtung 17 verläuft dabei unter einem Winkel α aus der Horizontalen nach oben. Ein Scherstift 41 erstreckt sich durch die Lagerung 13 in die Schwenkachse 11 und hindert diese am Drehen. Die freien Enden der Schwenkachse 11 besitzen jeweils einen Fortsatz mit geringerem Durchmesser, gegen die jeweils eine Vorspanneinrichtung in Form einer Feder 35, die als Flachfeder ausgeführt ist, drückt. Die Feder 35 ist in der Lagerung 13 in eine entsprechende Nut 36 eingelegt sowie darin verstemmt und dient dazu, die Schwenkachse 11, die in Figur 5 vollkommen zylindrisch ausgeführt ist, im zylindrischen Abschnitt 19 der Lageröffnung 15 zu halten, so daß eine unbetätigte Stellung definiert wird.

Die in Figur 8 gezeigte Lagerung 13' entspricht, was den Scherstift 41 und die Feder 35 betrifft, der in Figur 7 gezeigten Lagerung 13. Die Lageröffnung 15 hat auch hier einen zylindrischen Abschnitt 19, an den sich eine Ausbuchtung anschließt, die jedoch einen gezahnten Abschnitt 23 aufweist. Die Schwenkachse 11 hat keinen vollständig zylindrischen Außenmantel, wie dies in Figur 7 gezeigt ist, sondern lediglich einen zylindrischen Abschnitt 27, an den sich ein Abschnitt 25 mit einem gezahnten Profil anschließt, welches ein Gegenprofil zum Verzahnungsprofil im Abschnitt 23 darstellt.

Die in Figur 9 gezeigte Lagerung 13'' entspricht im wesentlichen der in Figur 8 gezeigten Lagerung 13', wobei anstatt des Scherstifts 41 eine ratschenartige Verbindung 43 vorgesehen ist, die einen sägezahnartigen lagerseitigen Vorsprung 45 umfaßt, der in eine komplementär ausgebildete Ausnehnung 47 in der Schwenkachse 11 eingreift. Der Vorsprung 45 und die Ausnehmung 47 sind so ausgebildet, daß die Schwenkachse 11 in einer Richtung P schwenkbar ist und in Gegenrichtung sperrt.

Anhand der Figuren wird nun die verletzungsmindernde Wirkung des Fahrzeugsitzes 2 bei einem Heckaufprall erläutert. Bei normaler Fahrt ist der Fahrzeugsitz 2 in der in Figur 1 gezeigten Gebrauchsstellung, wobei Haltemittel in Form der Rückstellfeder 49, des Scherstiftes 41 oder der ratschenartigen Verbindung 43 den Hebel 9 gegen Schwenken in der Gebrauchsstellung halten. Auch die Feder 35 wirkt zur Halterung des Hebels 9 in der Gebrauchsstellung mit.

Im Falle eines Heckaufpralls wird der Fahrzeuginsasse 1 aufgrund seiner trägen Masse im Fahrzeug nach hinten geschleudert, wobei aufgrund des geringen Abstands Y zuerst die Schulterpartien den Rückenlehnenteil 7 berühren. Der dadurch ausgeübte Stoß bewirkt eine Drehung des zweiarmigen Hebels 9 in Richtung P, wie in Figur 2 zu sehen ist, so daß die Kopfstütze 5 nach vorne verstellt wird. Der Kopf selbst trifft schließlich auf die nur noch geringfügig beabstandete Kopfstütze 5 auf, so daß die Belastungen im Nackenbereich reduziert werden.

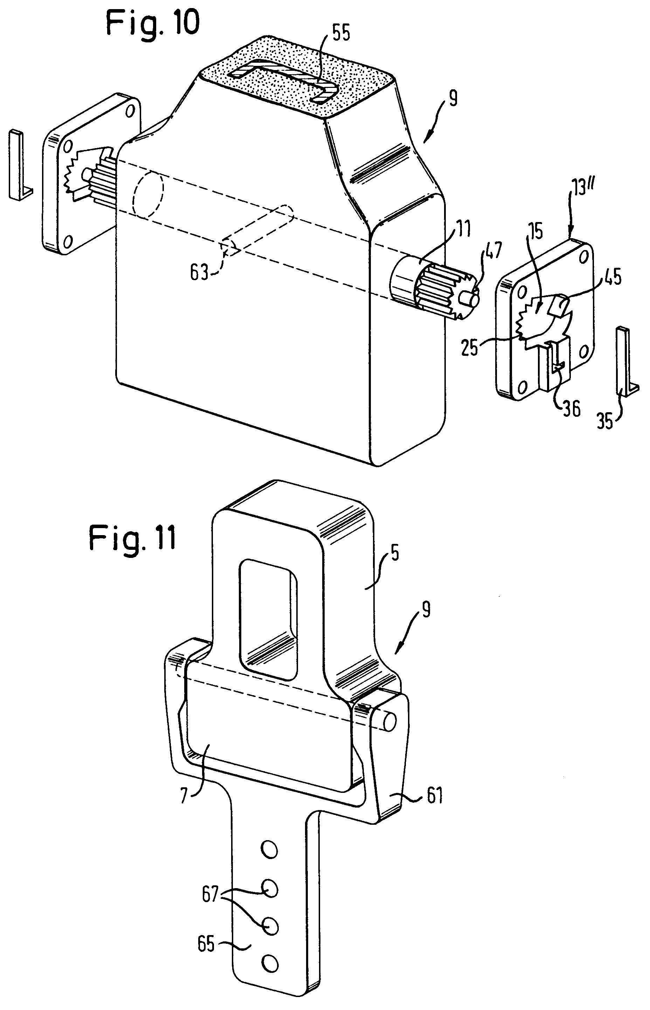

Da der Kopf und die Schulterpartien unterschiedliche Massen aufweisen, die auf den Hebel 9 einwirken, kann ein Ungleichgewicht am Hebel 9 vorhanden sein, welches die Kopfstütze 5 labil macht, so daß dennoch Relativbewegungen auftreten können. Um dies zu vermeiden, wird versucht, ein Gleichgewicht am Hebel 9 zu erreichen, indem die Hebelarme *l*1 und *l*2 an der Kopfstütze 5 bzw. am Rückenlehnenteil 7, die durch den jeweiligen Kraftangriffspunkt der Kopfmasse bzw. Schultermasse gebildet werden, sich reziprok zu den entsprechenden, auf diese Teile auftreffenden Körpermassen verhalten. Hierbei wird ein Fahrzeuginsasse mittlerer Größe als Bezugsobjekt gewählt. Wie in Figur 2 zu erkennen ist, ergibt sich aufgrund der trägen Massen und der Hebelarme *l*1 und *l*2 ein Kräftegleichgewicht am Hebel 9. Um auch Fahrzeuginsassen 1 mit extremen Körperstaturen wirksam zu schützen, liegt das Verhältnis *l*1:*l*2 der Hebelarme *l*1 und *l*2 im Bereich zwischen 2,5:1 bis 6:1, vorzugsweise jedoch im Bereich zwischen 4:1 bis 6:1, da das Verhältnis zwischen Kopfmasse und anteiliger Schultermasse beim überwiegenden Teil Personen im Bereich von 1:4 bis 1:6 liegt. Das Verhältnis der Länge 13 der Kopfstütze 5 zur Länge 14 des Rückenlehnenteils liegt vorzugsweise im Bereich zwischen 2,5:1 bis 6:1. Ob ein Gleichgewicht am Hebel 9 auftritt, hängt jedoch insbesondere auch von der Lage der Schwenkachse 11 ab. Durch vertikale Verstellung der Schwenkachse 11 können die Hebelarme *l*1 und *l*2 auf die jeweilige Person abgestimmt werden. In Figur 11 ist hierzu die Kopfstütze 5 in einem bügelförmigen Träger 61 gelagert, der eine Zunge 65 mit mehreren, gleichmäßig beabstandeten Bohrungen 67 hat, wobei die Zunge 65 in eine entsprechende Lagerung in der Rückenlehne 3 aufgenommen wird und über eine nicht gezeigte ausklinkbare Rasteinrichtung, die in einzelne Bohrungen 67 eintritt, die Höhe der Kopfstütze 5 und damit des gesamten Hebels 9 verstellbar ist. Da bei nicht korrekt eingestellter Kopfstütze kein absolutes Kräftegleichgewicht im Kollisionsfall vorhanden sein kann und die Massen teilweise zeitlich versetzt auf den Hebel 9 wirken, sind Einrichtungen vorgesehen, die die Lage der Kopfstütze 5, sobald sie zum Kopf hin geschwenkt worden ist, möglichst festhält. Diese Einrichtungen wirken erst im Kollisionsfall bei radialer Beanspruchung und bewirken, daß die Verschwenkung von Kopfstütze 5 und Rückenlehnenteil 7 zumindest gehemmt, vorzugsweise sogar verhindert wird. In Figur 7 ist hierzu ein Mittel zur Erzeugung einer Reibkraft gezeigt, die durch die Ausbuchtung 17 gebildet wird. Im Kollisionsfall schwenkt die Schwenkachse 11 in Richtung P, und der Scherstift 41 wird abgeschert. Durch die auf das Rückenlehnenteil 7 und bei Kopfkontakt auf die Stütze 5 wirkenden radialen Kräften verschiebt sich die Schwenkachse 11 gegen die Kraft der Feder 35 nach hinten und dringt in die keilförmig zulaufende Ausbuchtung 17 ein, wo sie geklemmt wird oder zumindest ein Drehen aufgrund einer erhöhten Reibung erschwert wird. Wenn Selbsthemmung auftritt, sind Relativbewegungen zwischen Kopf und Schulter sogar ausgeschlossen.

In Figur 8 bilden der gezahnte Abschnitt 23 und der Abschnitt 25 ein Mittel zur Erzeugung eines Formschlusses, der eine Verschwenkung des Hebels 9 in betätigter Stellung der Mittel ausschließt. Im Fall eines Heckaufpralls wird die Schwenkachse 11, nachdem sie sich mittels ihres zylindrischen Abschnitts 27 gedreht hat, relativ zum Fahrzeug nach hinten verlagen, so daß die Verzahnung am Abschnitt 25 in die entsprechende Verzahnung am Abschnitt 23 der Lagerung 13' eingreift. In dieser betätigten Stellung ergibt sich eine Blockierlage für den Hebel 9. In den Ausführungen nach den Figuren 7 und 8 muß nach der Verschiebung der Schwenkachse 11 nach hinten ein neuer Scherstift 41 eingebracht werden, wogegen es die Lagerung 13'' nach Figur 9 erlaubt, daß bei leichten Unfällen die Schwenkachse 11 wieder manuell in ihre Ausgangslage zurückgestellt wird. Der Vorsprung 45 wird nämlich bei Drehung in Richtung P nicht abgeschert.

Es können darüber hinaus auch andere Mittel zur Erzeugung des Formschlusses vorgesehen sein. Z.B. müßte die Schwenkachse 11 nicht, wie in Figur 8 gezeigt, über einen halben Umfang kerbverzahnt sein, sondern es könnten bereits wenige Zähne an Umfang ausreichen.

Um ein sehr hartes Auftreffen der Kopfstütze auf den Kopf zu verhindern, kann die Kopfstütze 5 entsprechend weich abgepolstert sein. Die Rückstellfeder 49 kann dabei als zusätzliche Dämpfung, ebenso wie der separate Dämpfer 71 den auftretenden Stoß verringern. Zusätzlich läßt sich auch durch ein höheres Reibmoment an der Schwenkachse 11 die gleiche Wirkung erzielen, indem der Durchmesser der Fortsätze der Schwenkachse 11, in denen die Federn 35 angreifen, vergrößert wird.

## Patentansprüche

1. Fahrzeugsitz mit einer in der Rückenlehne (3) integrierten Kopfstütze (5), dadurch gekennzeichnet, daß die Rückenlehne (3) mit einer Kraftaufnahmeeinrichtung, einer Kraftübertragungseinrichtung und einer Kopfstützenverstelleinrichtung versehen ist, wobei die Einrichtungen so ausgebildet sind, daß die durch die träge Masse eines Fahrzeuginsassen (1) bei einem Heckaufprall erzeugte Kraft teilweise durch die Kraftaufnahmeeinrichtung aufgenommen und über die Kraftübertragungseinrichtung zur Verstelleinrichtung geleitet wird, um die Kopfstütze (5) zum Kopf des Fahrzeuginsassen (1) hin zu verstellen.

2. Fahrzeugsitz nach Anspruch 1, dadurch gekennzeichnet, daß die Kopfstütze (5) mit einem separaten, als Kraftaufnahmeeinrichtung wirkenden Rückenlehnenteil (7) einen zweiarmigen Hebel (9) bildet, der um eine horizontale, in der Rückenlehne (3) angeordnete Schwenkachse (11) schwenkbar gelagert ist.

3. Fahrzeugsitz nach Anspruch 2, dadurch gekennzeichnet, daß der separate Rückenlehnenteil (7) eine im oberen Rückenlehnenbereich gebildete Schulterabstützung ist und die Schwenkachse (11) zwischen Kopfstütze (5) und Schulterabstützung angeordnet ist.

4. Fahrzeugsitz nach Anspruch 2 oder 3, dadurch gekennzeichnet, daß der durch den Kraftangriff eines Fahrzeuginsassen (1) mittlerer Körperstatur gebildeten Hebelarm (*l*1) an der Kopfstütze (5) wesentlich länger als der durch den Kraftangriff am Rückenlehnenteil (7) gebildete Hebelarm (*l*2) ist, wobei sich die Hebelarme (*l*1, *l*2) auf den jeweiligen Kraftangriffsmittelpunkt beziehen.

5. Fahrzeugsitz nach Anspruch 4, dadurch gekennzeichnet, daß das Verhältnis der Hebelarme (*l*1, *l*2), die durch Kraftangriff an der Kopfstütze (5) und durch Kraftangriff am Rückenlehnenteil (7) gebildet werden, reziprok zu dem Verhältnis der Körpermassen eines Fahrzeuginsassen mittlerer Körperstatur ist, die auf die Kopfstütze (5) und das Rückenlehnenteil (7) einwirken und daß das Verhältnis der Hebelarme (*l*1, *l*2), die durch den Kraftangriff an der Kopfstütze (5) und durch den Kraftangriff am Rückenlehnenteil (7) gebildet werden, vorzugsweise im Bereich zwischen 2,5:1 bis 6:1 liegt.

6. Fahrzeugsitz nach einem der Ansprüche 2 bis 5, dadurch gekennzeichnet, daß die Schwenkachse (11) im wesentlichen durch den Schwerpunkt der durch die Kopfstütze (5) und den Rückenlehnenteil (7) gebildeten Hebel (9) verläuft.

7. Fahrzeugsitz nach einem der Ansprüche 2 bis 6, dadurch gekennzeichnet, daß eine Lagerung (13; 13'; 13'') für die Schwenkachse Mittel zur Erzeugung einer Reibkraft und/oder Mittel zur Erzeugung eines Formschlusses aufweist, die die Verschwenkung von Kopfstütze (5) und Rückenlehnenteil (7) bei radialer Beanspruchung hemmen oder blockieren.

8. Fahrzeugsitz nach Anspruch 7, dadurch gekennzeichnet, daß die Lagerung (13; 13'; 13'') so ausgebildet ist, daß bei einer bestimmten radialen Beanspruchung die Mittel zur Erzeugung der Reibkraft und/oder die Mittel zur Erzeugung eines Formschlusses durch eine durch die träge Masse des Fahrzeuginsassen (1) bei einem Heckaufprall hervorgerufene Relativbewegung zur Schwenkachse (11) aus einer unbetätigten in eine betätigte Stellung verschiebbar sind.

9. Fahrzeugsitz nach Anspruch 8, dadurch gekennzeichnet, daß im Zustand ohne radiale Beanspruchung eine Vorspanneinrichtung die unbetätigte Stellung der Mittel festlegt.

10. Fahrzeugsitz nach einem der Ansprüche 7 bis 9, dadurch gekennzeichnet, daß die Lagerung (13) eine Lageröffnung (15) mit einem zylindrischen Abschnitt (19) und einem nichtzylindrischen Abschnitt aufweist, wobei die Schwenkachse (11) bei radialer Beanspruchung mit dem nichtzylindrischen Abschnitt in Kontakt gelangt und der nichtzylindrische Abschnitt zumindest teilweise die Mittel zur Erzeugung der Reibkraft und/oder zur Erzeugung des Formschlusses aufweist.

11. Fahrzeugsitz nach Anspruch 10, dadurch gekennzeichnet, daß die Lageröffnung (15) eine Ausbuchtung (17) mit einem sich stetig verengenden Querschnitt als Mittel zur Erzeugung einer Reibkraft aufweist, in die die Schwenkachse (11) in der betätigten Stellung eindringt.

12. Fahrzeugsitz nach Anspruch 10 oder 11, dadurch gekennzeichnet, daß der nichtzylindrische Abschnitt (19) der Lageröffnung (15) in Form einer Ausbuchtung (21) einen gezahnten Abschnitt (23) aufweist und daß die Schwenkachse (11) einen Abschnitt (25) mit einem Gegenprofil zum gezahnten Abschnitt (23) sowie einen zylindrischen Abschnitt (27) hat.

13. Fahrzeugsitz nach einem der Ansprüche 2 bis 12, dadurch gekennzeichnet, daß die Kopfstütze (5) in einer normalen Gebrauchsstellung durch Haltemittel gehalten ist, die erst bei einem Heckaufprall durch Druck auf den Rückenlehnenteil (7) aufgrund von Trägheitskräften überwunden werden.

14. Fahrzeugsitz nach Anspruch 13, dadurch gekennzeichnet, daß die Haltemittel wenigstens einen Scherstift (41) umfassen.

15. Fahrzeugsitz nach Anspruch 14 oder 15, dadurch gekennzeichnet, daß die Haltemittel eine in Schwenkrichtung drehbare und in Gegenrichtung sperrbare ratschenartige Verbindung (43) aufweist.

16. Fahrzeugsitz nach Anspruch 15, dadurch gekennzeichnet, daß die ratschenartige Verbindung (43) einen sägezahnartigen lagerseitigen Vorsprung (45) umfaßt, der in der Gebrauchsstellung in eine komplementäre Ausnehmung (47) an der Schwenkachse (11) eingreift.

17. Fahrzeugsitz nach einem der Ansprüche 13 bis 16, dadurch gekennzeichnet, daß die Haltemittel eine Rückstellfeder (49) umfassen, die die Kopfstütze (5) in die Gebrauchsstellung und gegen einen Anschlag drückt.

18. Fahrzeugsitz nach einem der vorstehenden Ansprüche, dadurch gekennzeichnet, daß ein Dämpfer (71) vorgesehen ist, der die Schwenkbewegung der Kopfstütze (5) dämpft.
